# EUROPEAN PATENT SPECIFICATION

(11) **EP 1 451 637 B1**
(45) Date of publication and mention of the grant of the patent: **14.09.2005**
(21) Application number: 02779808.1
(22) Date of filing: 29.10.2002
(51) Int. Cl.: G02F 1/1337

(54) **COLOUR LIQUID CRYSTAL DISPLAY DEVICE**
FARBFLÜSSIGKRISTALLANZEIGEVORRICHTUNG
DISPOSITIF D'AFFICHAGE COULEUR A CRISTAUX LIQUIDES

(30) Priority: 28.11.2001 EP 01204587
(43) Date of publication of application: 01.09.2004
(73) Proprietor: Koninklijke Philips Electronics N.V., 5621 BA Eindhoven (NL)
(72) Inventor: ROOSENDAAL, Sander, J., NL-5656 AA Eindhoven (NL); NIEUWKERK, Armanda, C., NL-5656 AA Eindhoven (NL)
(74) Representative: Raap, Adriaan Yde
(86) International application number: PCT/IB2002/004544
(87) International publication number: WO 2003/046651

(56) References cited:
- EP-A- 0 632 311
- US-A- 5 717 474
- US-A1- 2001 043 301
- LIEN A ET AL: "UV MODIFICATION OF SURFACE PRETILT OF ALIGNMENT LAYERS FOR MULTIDOMAIN LIQUID CRYSTAL DISPLAYS" APPLIED PHYSICS LETTERS, AMERICAN INSTITUTE OF PHYSICS. NEW YORK, US, vol. 67, no. 21, 20 November 1995 (1995-11-20), pages 3108-3109, XP000675506 ISSN: 0003-6951

## Description

The present invention relates to a liquid crystal display device with at least a first pixel comprising a first liquid crystal material layer segment having a first twist angle, and a second pixel comprising a second liquid crystal material layer segment having a second twist angle.

Liquid crystal displays are becoming more and more common for a variety of applications, such as computer displays, cellular telephone displays, etc. Many different constructions and configurations have been proposed for various applications.

However, a general problem with LCD displays is that the light efficiency is inherently low. For example, for a conventional transmissive display, only about 5 to 10% of the light generated by a backlight panel and transmitted through the various layers of the LCD display exits the display towards a viewer. The rest of the light is absorbed or lost due to other means in the display. For example, the use of polarizers and absorbing color filters contributes to large efficiency losses. Consequently, a great effort is being made to minimize the losses in LCD displays, and thereby generate a display having a high transmission and low losses.

For example, some efforts have been made to eliminate certain elements, such as the absorbing color filter in order to provide a higher efficiency. One example of such a display is described in US patent 6,078,370. This document describes a sub-pixellated color liquid crystal display, in which the liquid crystal layer for each sub-pixel is arranged to have a different angle of birefringence. However, due to the lack of a color filter, this display will exhibit an unsaturated color appearance for some optical modes.

Furthermore, a second general problem with liquid crystal displays is that the polarization change of the light caused by the liquid crystal cell in a dark state is not equal for all wavelengths. This problem occurs mainly in reflective twisted nematic displays, and results in a residual transmission in the dark state of the cell, which decreases the contrast ratio of the cell.

### OBJECT AND SUMMARY OF THE INVENTION

It is an object of the present invention to provide a display device which does not have the above-mentioned drawbacks, and has a saturated color appearance and a comparatively high light efficiency.

These and other objects are achieved by a liquid crystal display device described in the opening paragraph, which is characterized in that a first and a second color filter are arranged in line with said first and second liquid crystal material layer segments, respectively, said color filters being arranged to transmit light of a first and a second wavelength, respectively, the second wavelength being different from the first wavelength, the device being such that said first twist angle is chosen so as to optimize transmission at said first wavelength, and said second twist angle is chosen so as to optimize transmission at said second wavelength. It is to be understood that the above-mentioned wavelengths are intended to be interpreted as any one of a wavelength or wavelength interval. By individually optimizing the twist angle for each color, an optimal transmission is achieved for each color. Depending on how this optimization is realized a bright display, having a good color purity or a high contrast display, in which the twist angle is chosen to minimize the transmission or the reflectivity of a certain wavelength in a black state of the display, may be achieved. It is also possible to optimize the viewing angle by optimizing the twist angles. It should, however, be noted that the twist angles are optimized for one of the above purposes, not for all of them at the same time.

Preferably, each liquid crystal material layer segment is sandwiched between a front and a back alignment layer, and at least one of said alignment layers is preferably a photoalignment layer being patterned to fit each pixel. Photoalignment is an easy way of generating the above described individually optimized twist angles.

Furthermore, one of said alignment layers is preferably a common layer for both pixels having a single alignment direction. The processing time as well as the costs may thereby be reduced.

Preferably, said liquid crystal material layer segments comprise one of a twisted nematic, super twisted nematic, or twisted vertically aligned nematic liquid crystal material, which are examples of materials for which the present invention is useful. Furthermore, said first and second color filters are arranged on a viewer side of said first and second liquid crystal material layer segments, respectively.

In accordance with a first embodiment of the invention, each alignment layer is essentially transparent and said display device is comprised in a transmissive display device. In accordance with a second embodiment of the invention, the liquid crystal display device further comprises a reflecting layer arranged on a rear side of said back alignment layer, said display device constituting a reflective display device. Finally, in accordance with a third embodiment of the invention, said display comprises a back-transflecting element for generating a transflective display device.

A currently preferred embodiment of the present invention will now be described in closer detail, with reference to the accompanying drawings.
Fig 1 is a schematic drawing of a cross-section of a transmissive display device, utilizing the invention.
Fig 2 is a graph showing an example of transmission dependence on the twist angle for three different wavelengths. In this example, the angle between the polarizer and the analyzer was 90 degrees and the calculation was made for a transmissive TN cell with an optical thickness of 430 nm.
Fig 3 is a schematic drawing of a patterning process of a color filter.
Fig 4 is a schematic drawing of a cross-section of a reflective display device, utilizing the invention.
Fig 5 is a graph showing an example of transmission dependence on the wavelength for three different twist angles for a twisted vertically aligned nematic cell.

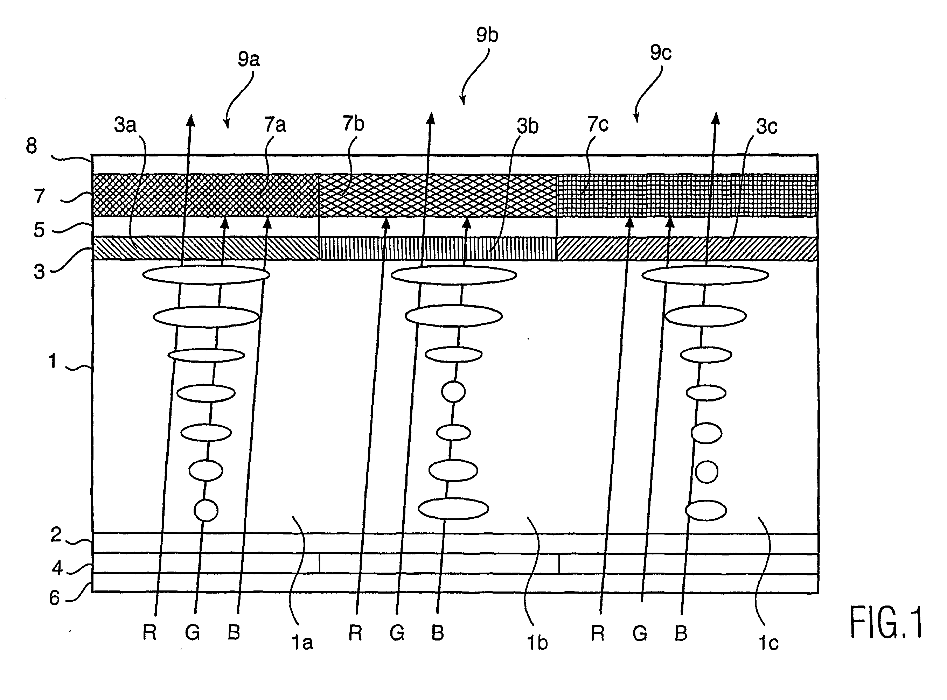

A first preferred embodiment of the invention will hereinafter be described with reference to Fig 1. Fig 1 discloses a configuration of the invention for a transmissive liquid crystal display, having an array of pixels, comprising one pixel for emitting red light, one for emitting green light, and one for emitting blue light.

Basically, the display device comprises a liquid crystal material layer 1, which is sandwiched between a back and a front alignment layer 2,3. Back and front electrodes 4,5 are arranged on the rear and front side of said alignment layers 2,3. Together, said liquid crystal layer 1, said alignment layers 2,3 and said electrodes 4,5 constitute a liquid crystal cell. A color filter 7 is arranged on the front side of said front electrode 5, and the entire construction as described above is sandwiched between a back and a front glass substrate 6,8. Said alignment layers 2,3 and said electrodes 4,5 are made of essentially transparent materials, in order to provide a transmissive display. For example, said electrodes 4,5 may be manufactured from ITO.

As described above, the device shown in Fig. 1 is divided into three pixels, a "red" pixel 9a, a "green" pixel 9b and a "blue" pixel 9c, each comprising a liquid crystal layer segment 1a, 1b, 1c, respectively. Consequently, said color filter is also divided into three color filter segments, a red color filter segment 7a for transmitting red light, a green color filter segment 7b for transmitting green light, and a blue color filter segment 7c for transmitting blue light. Similarly, the front alignment layer 3 is divided into three pixel segments, a "red" alignment layer segment 3a, a "green" alignment layer segment 3b and a "blue" alignment layer segment 3, thereby constituting a patterned front alignment layer 3. In the embodiment shown in Fig. 1, said front alignment layer 3 is a photoalignment layer. Furthermore, said alignment layer segments 3a-c are arranged to have different alignment directions, as will be described below. In this embodiment said back alignment layer 2 is one layer, extending across all of the three pixels, having a single alignment direction. This layer may be formed, for example, by traditional rubbing techniques, or by one-step photo alignment.

The above red pixel comprises a liquid crystal layer segment 1a which is sandwiched between said back alignment layer 2 and said red alignment layer segment 3a, the above green pixel comprises a liquid crystal layer segment 1b which is sandwiched between said back alignment layer 2 and said green alignment layer segment 3b and the above blue pixel comprises a liquid crystal layer segment 1c, which is sandwiched between said back alignment layer 2 and said blue alignment layer segment 3c.

In this embodiment, said liquid crystal layer 3 is a twisted nematic liquid crystal layer, and the description of this preferred embodiment is consequently adapted thereto. However, it is possible to utilize the inventive concept with other liquid crystal configurations, as will be described below.

As described above, each photoalignment segment is arranged to have a different alignment direction. Consequently, the liquid crystal segment twist angle, between said back and front alignment layers will be different for each pixel, depending on the angle difference between the alignment direction of the back alignment layer 2 and the respective one of said front alignment layers 3a-c.

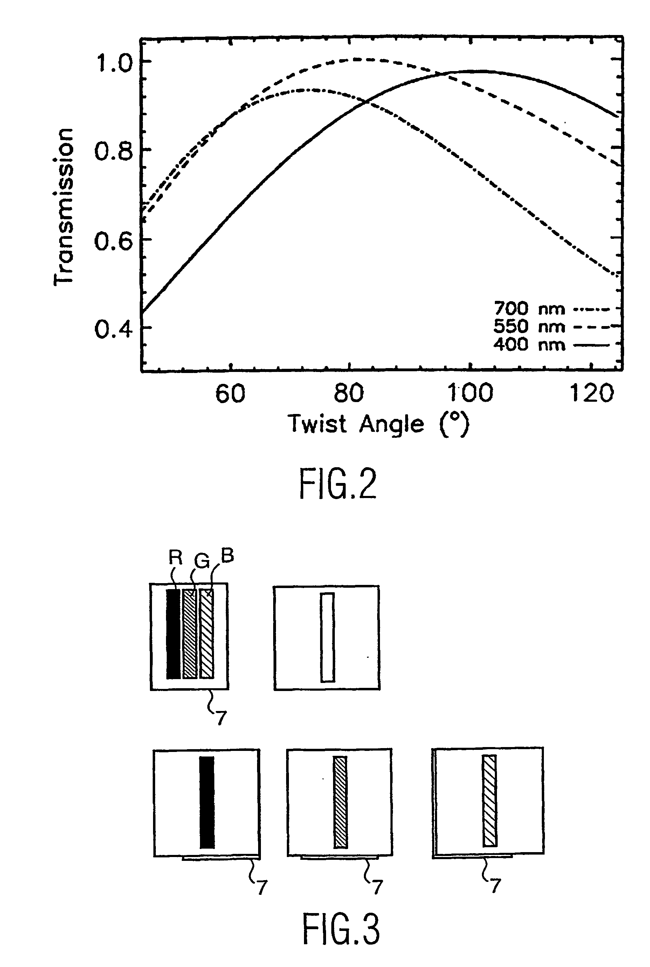

However, for a transmissive twisted nematic LCD, the transmission through the liquid crystal layer is dependent on the wavelength of the light, the orientation of the polarizer and analyzer sandwiching the display (not shown), the twist angle and the optical thickness of the display. An example, showing the transmission dependence on the twist angle for three different wavelengths, namely 400nm (blue), 550 nm (green) and 700 nm (red) is shown in Fig. 2. The measurements in Fig. 2 were made at an angle of 90 degrees between the polarizer and the analyzer and for a TN cell having an optical thickness of 430 nm. As is visible from Fig. 2, in which a transmission of 1 is the theoretical maximal transmission, the three different wavelengths exhibit a maximal transmission for three different twist angles. It is thus possible to optimize the above parameters for the colors red, green and blue separately. This is done by choosing suitable alignment directions for said alignment layer sections 3a-c, and thereby generating suitable twist angles between the respective one of said alignment layer sections 3a-c and the back alignment layer 2. The twist angle is optimized for the respective transmission wavelength spectrum of the respective color filter section 7a-c.

A display with different twist angles for the three color pixels may be achieved in three different ways, by patterning the front alignment layer 3, by patterning the back alignment layer 2 or by patterning both the back and front alignment layers 2,3. However, the last-mentioned approach is more time-consuming and involves more mask steps which lead to a higher risk of production faults, and is therefore less suitable for manufacturing.

It may further be shown that the viewing angle of a display has a similar wavelength and twist angle-dependent pattern (not shown in the drawings). It is thus also possible to optimize the viewing angle of the display separately for different colors of the display, using the same basic principle.

As is described above, the photoalignment layer is arranged to have different sections with different alignment directions, each covering one of the above-mentioned pixels. Photoalignment is a technique, which uses polarized or unpolarized ultraviolet light to obtain orientation in the alignment layer on which the liquid crystals orient themselves. In contrast to commonly used rubbing techniques, which may be used to manufacture said back alignment layer, photoalignment is a non-contact method which does not suffer from electrostatic damage to the thin-film transistors of the substrate display (not shown) and does not produce dust or other small particles which are not compatible with a clean room environment, and thereby the manufacturing yield is reduced. It has also the advantage of uniform alignment over large areas and may be used on irregular surfaces. The main advantage of photoalignment is the possibility to pattern the substrate by exposing the different parts of the substrate through a mask, so that a patterned photoalignment layer as shown in Fig. 1 may be achieved. Consequently, a patterned alignment layer, in which each segment has a different alignment direction, chosen to be such that the transmission or viewing angle for that certain section is maximized, may readily be achieved.

Furthermore, as stated above, the device comprises a color filter 7 having three segments, red 7a, green 7b, and blue 7c. Generally, this color filter 7 is realized by a plate having stripes or lines of the colors red, green and blue. As described above, in order to optimize the color performance of the display, the respective twist angles of the segments having different colors, i.e. being covered by different color filter segments, need to be different. There are two different ways of achieving the patterned alignment layer in order to obtain the regions having different twist angles, corresponding to the differently colored parts of the color filter 7, as described above. First, it is possible to use three different masks, each being optimized for the color they are arranged to pattern. Secondly, it is possible to use a fixed mask, moving over the substrate, in order to provide all three color filter segments 7a-c. It is dependent upon the photoalignment equipment which of the above methods is preferred. The last-mentioned method will, however, be described in more detail below, and is shown in Fig. 3. The mask comprises a plurality of lines having the same width as the pixels. For example, for a display having 100*300 micron pixels, the mask consists of lines having a width of 100 microns and a spacing of 200 microns. The patterning is thereafter performed in three steps, one step in which the mask is positioned over the "red pixel area", in which the substrate is exposed to "red" radiation, having a pre-determined polar angle. Thereafter, the mask is moved to a position over a "green pixel area", in which the substrate is exposed to "green" radiation, having a pre-determined polar angle, and thereafter, the mask is moved to a position over a "blue pixel area", having a pre-determined polar angle. The polar angles of the color filter segments 7a-c can be varied to obtain the correct liquid crystal orientation on the patterned photoalignment layer 3. As an example, a polar angle of 70 degrees for red, 68 degrees for green and 90 degrees for blue pixels may be obtained by using polar angles of 70 degrees, 68 degrees and 90 degrees in combination with a common predetermined orientation direction of the back alignment layer 2.

Due to variations of the twist angle between neighbouring pixels, disclination lines may be formed between these pixels. However, with an appropriate mask, these disclination lines may be positioned in the middle of the black parts on the mask, separating the pixels and thus not influencing the contrast of the display.

Consequently, a transmissive twisted nematic display device has been arranged, having three sets of pixels, one set for displaying the colors red, green and blue, respectively. For each set of pixels, the twist angle of the liquid crystal layer is optimized for optimal transmission of one of the colors red, green and blue, and each pixel is further provided with a corresponding color filter, for transmitting only the color for which the LC layer twist angle is optimized. The total amount of light emanating from said display is thus maximized.

In this embodiment, unpolarised light for example emanating from a backlight panel, is incident on the display from the rear side of the display. The light comprises components of all three colors, RGB. The light is thereafter transmitted through a back polarizer (not shown), the glass substrate 6, the back electrode 4 and the back alignment layer 2. Subsequently, it is incident on the liquid crystal layer 1. Depending on the path of the light, it experiences a twist angle that is optimized for one of the colors, for example red, in accordance with Fig. 2. The chosen color (red) is thereby transmitted optimally through the pixel while the remaining colors (green, blue) are transmitted with a lower degree of transmission than their optimal transmission. Subsequently, the light is transmitted trough the front alignment layer 3 and the front electrode 5, whereafter it hits the color filter which is arranged to transmit the color, which has been optimally transmitted (i.e. in this case red). This color is then transmitted through the front substrate 8 and a front polarizer (not shown), whereafter it is arranged to reach the eye of a spectator (not shown). The above is applicable for all of the three pixels, for achieving different colors.

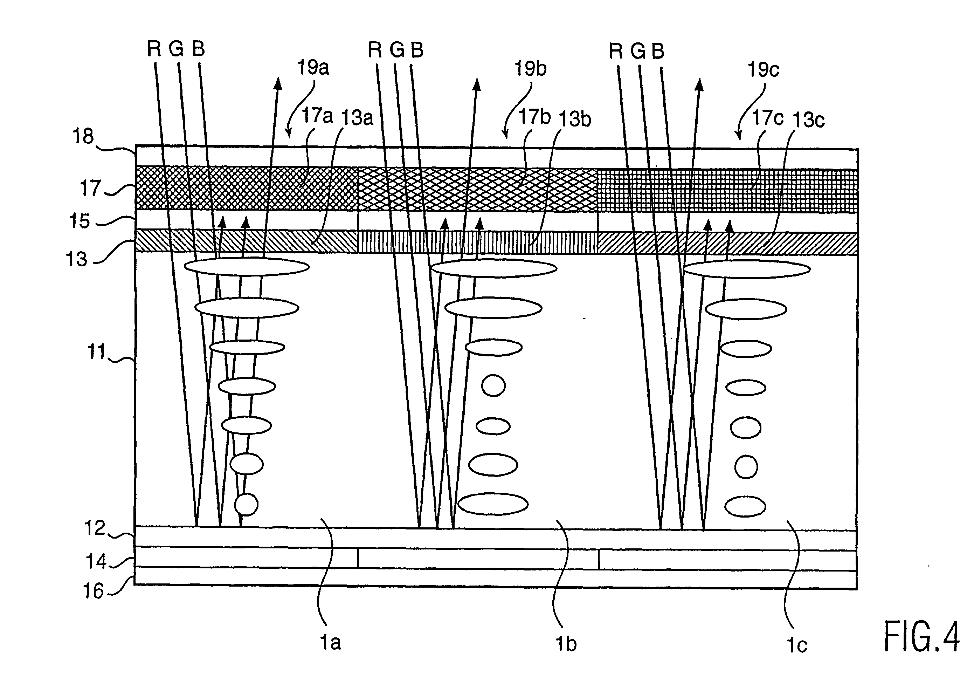

Even if the above description is directed towards a transmissive display, the inventive technique is equally applicable to, for example, reflective display devices. Such a display is shown in Fig. 4. The shown reflective display device has an array of pixels, comprising one pixel for emitting red light, one for emitting green light and one for emitting blue light.

Basically, the display device comprises a liquid crystal material layer 11, which is sandwiched between a back and a front alignment layer 12,13. Back and front electrodes 14,15 are arranged on the rear and front side of said alignment layers 12,13. The front electrode 15 is made of a transparent material, such as ITO, and the back electrode is a reflecting electrode. Together, said liquid crystal layer 11, said alignment layers 12,13 and said electrodes 14,15 constitute a liquid crystal cell. A color filter 17 is arranged on the front side of said front electrode 15, and the entire construction as described above is sandwiched between a back and a front glass substrate 16,18.

As described above, the device as shown in Fig. 4 is divided into three pixels, a "red" pixel 19a, a "green" pixel 19b and a "blue" pixel 19c, each comprising a liquid crystal layer segment 11a, 11b, 11c, respectively. Consequently, said color filter is also divided into three color filter segments, a red color filter segment 17a for transmitting red light, a green color filter segment 17b for transmitting green light, and a blue color filter segment 17c for transmitting blue light. Said color filter is provided as described above with reference to Figs. 1 and 4. Similarly, the front alignment layer 13 is divided into three pixel segments, a "red" alignment layer segment 13a, a "green" alignment layer segment 13b and a "blue" alignment layer segment 13c, thereby constituting a patterned front alignment layer 13. In the embodiment shown in Fig. 4 said front alignment layer 13 is a photoalignment layer. Furthermore, said alignment layer segments 13a-c are arranged to have different alignment directions, as is described in detail above. Correspondingly, said back alignment layer 12 is one layer in this embodiment, extending across all of the three pixels, having a single alignment direction. This layer may be formed, for example, by traditional rubbing techniques, or by one-step photo alignment.

As stated above, the above red pixel comprises a liquid crystal layer segment 11 a which is sandwiched between said back alignment layer 12 and said red alignment layer segment 13a, the above green pixel comprises a liquid crystal layer segment 11b which is sandwiched between said back alignment layer 12 and said green alignment layer segment 13b, and the above blue pixel comprises a liquid crystal layer segment 11c, which is sandwiched between said back alignment layer 12 and said blue alignment layer segment 13c.

In the present invention, said liquid crystal layer 13 is a twisted nematic liquid crystal layer, and the description of this preferred embodiment is consequently adapted thereto. However, it is possible to utilize the inventive concept of this invention with other liquid crystal configurations.

In this embodiment, unpolarised light comprising components of all of the three colors, RGB, is incident on the display from the front side of the display, passing a front polarizer (not shown). When the light reaches the color filter 17, for example, the red color filter, the greater part of the red light component is transmitted, while the greater parts of the green and blue light components are absorbed. However, a certain amount of green and blue light will also be transmitted. Thereafter, the light passes the liquid crystal layer, is reflected by said reflective electrode, and again passes the liquid crystal layer in the opposite direction. However, since the transmission is optimized for transmission of red light, the green and blue components are further suppressed, as compared with prior-art devices. Subsequently, the light passes the same color filter a second time, as well as the front polarizer, whereafter the greater part of the red light component is transmitted, while the green and blue components are minimized. The above is applicable to all of the three pixels, for achieving different colors.

When it comes to color filters of this kind, the thickness of the filter determines the transmission. The thicker the filter, the lower the transmission. Due to the fact that the transmission of the liquid crystal layer is optimized for the color that is desired to be transmitted, the other colors will be suppressed more than in prior-art devices. Consequently, it is possible to reduce the thickness of the filter, without increasing the amount of "unwanted colors" emanating from the pixel. In conclusion, this invention allows us to make brighter displays, without reducing the color purity.

Furthermore, the invention is applicable to transflective displays. There are two major types of transflective displays, one utilizing a semi-transparent back reflecting electrode and one utilizing an array comprising both reflecting and transmitting pixels. Both embodiments are clear to those skilled in the art by studying the description of the reflective and transmissive displays, given above.

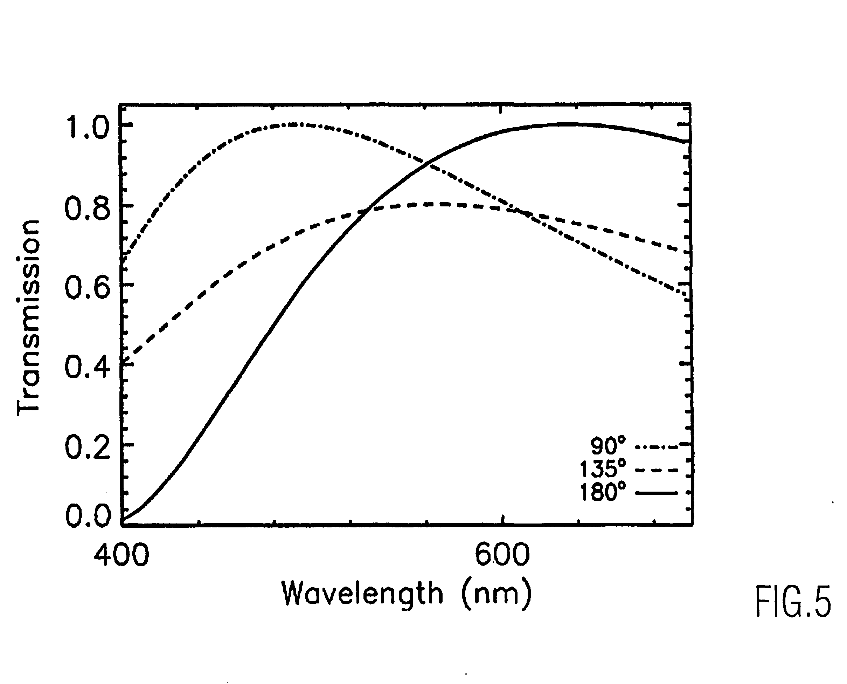

In addition, other embodiments of this invention are possible. For example, the inventive construction may be used in a vertically aligned liquid crystal display. In such a display, the liquid crystal material, having Δε<0, is aligned homeotropically, i.e. the director is aligned parallel to the liquid crystal cell normal direction in the non-switched case. A small pretilt angle is obtained by rubbing of the substrates in order to obtain a single tilting direction if a voltage is applied. Polarised light, traversing the cell, is not subject to any birefringence, and is entirely blocked by the crossed polarizers. As a voltage, which is larger than the threshold voltage is applied, the molecules of the liquid crystal material start to reorient themselves to form a minimum in the free energy. The molecules start to tilt away from the cell normal direction, until, at high voltages, they are aligned in the plane of the cell. A twist may be induced by changing the rubbing directions and/or adding some chiral material to the liquid crystal mixture. This so-called VAN LCD is a normally-black LCD. In the non-addressed state, the transmission is 0. If the voltage is increased above the threshold, the transmission increases. In Fig. 5, the transmission of a twisted VAN LCD as a function of the wavelength between 400 nm and 700 nm, in the bright state between crossed polarizers is shown. The twist angles of the different lines were 90, 135 and 180 degrees. The chiral dopant added to the liquid crystal should be adjusted to give a natural twist of about 135 degrees (plus or minus 20 degrees). The rubbing is replaced with photoalignment and the different color sub-pixels have rubbing directions such that the twist is 90, 135 and 180 degrees. The advantage of this invention is that the absorbtive color filter may be thinner, because less of the unwanted color has to be filtered out, as compared with normal transmissive (TN or VAN) LCDs. This leads to a brighter display.

The present invention should not be considered as being limited to the above-described embodiment, but rather includes all possible variations within the scope defined by the appended claims. It should especially be noted that the appended drawings are not drawn to scale, but are intended as schematical representations for explanatory purposes. Furthermore, it should be noted that the drawings are schematic, and that certain essential elements of an LCD panel are intentionally left out. For example, TFTs, black matrix elements between pixels and source and gate lines for driving the display, are left out for clarity.

It should also be noted that the actual position of the color filter, with respect to the glass substrate and the ITO layers of the display, may be varied.

Furthermore, it should be noted that, although the above example is described with reference to a display having red, green and blue pixels, the same technique is applicable to other configurations, such as two-color displays, etc.

Moreover, it will be clear to those skilled in the art that each of the above-mentioned colors may have one or several wavelengths, as well as an entire wavelength interval. It should also be noted that the diagrams shown in Fig. 2 and Fig. 5 are examples of a respective material and one optical path length, and that the corresponding graph for other materials and/or optical path lengths differs from the one shown in Fig. 2 and Fig. 5, respectively.

Furthermore, the invention may be used with a plurality of liquid crystal material configurations, such as twisted nematic, supertwisted nematic and vertically aligned liquid crystal configurations, but it is also possible to use other configurations without departing from the scope of this invention, as defined by the appended claims.

Moreover, it is possible to use the present invention in a reflected twisted nematic LCD, in which the twist angle may be optimized for each color separately in order to minimize the reflection in the dark state. In this way, the contrast of the display may be increased. This may further be applied to both normally-black and normally-white LCDs.

The invention may also be used in a variety of different display types, for example in a transmissive display, in which each alignment layer is essentially transparent and said display device is comprised in a transmissive display device. The display device in accordance with the invention may comprise a reflecting layer which is arranged on a rear side of said back alignment layer, said display device constituting a reflective display device. Also, the display device may comprise a back transflecting element, such as a transflecting film or an arrangement with interspersed reflecting and transmitting sub-pixels, for generating a transflective display device.

It should also be noted that the term optimal transmission for the liquid crystal layer segment as used above and in the claims does not only describe the example in which the twist angle is chosen to be such that as much light as possible, having a certain wavelength, is transmitted. It is also intended to include the example in which the twist angle is chosen to minimize the reflectivity of a certain wavelength in a black state of the display, in order to optimize the contrast of, for example, a reflective twisted nematic display. It should also be noted that the purpose of optimizing the transmission for neighbouring pixels may be different. For one pixel, the purpose may be to optimize brightness for that pixel, and for an adjacent pixel the purpose may be to optimize the contrast. Furthermore, as described above, the invention may also be used for optimizing the viewing angle of the display device.

## Claims

1. A liquid crystal display device with a first pixel (9a, 19a) comprising a first liquid crystal material layer segment (1a, 11a) having a first twist angle, and a second pixel (9b, 19b) comprising a second liquid crystal material layer segment (1b, 11b) having a second twist angle, wherein a first and a second color filter (7a, 7b) are arranged in line with said first and second liquid crystal material layer segments (1a, 11a; 1b, 11b), respectively, said color filters (7a, 7b) being arranged to transmit light of a first and a second wavelength, respectively, the second wavelength being different from the first wavelength, **characterized in that** said first twist angle is chosen so as to optimize transmission at said first wavelength, and said second twist angle is chosen so as to optimize transmission at said second wavelength through said display device.

2. A liquid crystal display device as claimed in claim 1, wherein each liquid crystal material layer segment (1a, 11a; 1b, 11b) is sandwiched between a front (3a, 3b) and a back (2) alignment layer.

3. A liquid crystal display device as claimed in claim 2, wherein at least one of said alignment layers (3a, 3b) is obtainable by a photoalignment process, said layer being patterned to fit each pixel (9a, 9b).

4. A liquid crystal display device as claimed in claim 2 or 3, wherein one of said alignment layers (3) is a common layer for both pixels (9a, 9b) having a single alignment direction.

5. A liquid crystal display device as claimed in any one of the preceding claims, wherein said liquid crystal material layer segments (1a, 11a; 1b, 11b) comprise one of a twisted nematic, super twisted nematic, or twisted vertically aligned nematic liquid crystal material.

6. A liquid crystal display device as claimed in any one of the preceding claims, wherein said first and second color filters (7a, 7b) are arranged on a viewer side of said first and second liquid crystal material layer segments (1a, 11a; 1b, 11b), respectively.

7. A liquid crystal display device as claimed in any one of claims 1 to 6, wherein each alignment layer (3a, 3b; 2) is essentially transparent and said display device is comprised in a transmissive display device.

8. A liquid crystal display device as claimed in any one of claims 1 to 6, further comprising a reflecting layer (16) which is arranged on a rear side of said back alignment layer, said display device constituting a reflective display device.

9. A liquid crystal display device as claimed in any one of claims 1 to 6, said display comprising a back-transflecting element for generating a transflective display device.

## Patentansprüche

1. Flüssigkristallanzeigevorrichtung mit einem ersten Pixel (9a, 19a), welches ein erstes Flüssigkristallschichtsegment (1a, 11a) mit einem ersten Verdrehwinkel aufweist, sowie einem zweiten Pixel (9b, 19b), welches ein zweites Flüssigkristallschichtsegment (1b, 11b) mit einem zweiten Verdrehwinkel aufweist, wobei ein erstes und ein zweites Farbfilter (7a, 7b) jeweils mit dem ersten und zweiten Flüssigkristallschichtsegment (1a, 11a; 1b, 11b) ausgerichtet sind, wobei die Farbfilter (7a, 7b) so angeordnet sind, dass sie , jeweils Licht einer ersten und einer zweiten Wellenlänge durchlassen, wobei sich die zweite Wellenlänge von der ersten Wellenlänge unterscheidet, **dadurch gekennzeichnet, dass** der erste Verdrehwinkel zur Optimierung der Transmission bei der ersten Wellenlänge und der zweite Verdrehwinkel zur Optimierung der Transmission bei der zweiten Wellenlänge durch die Anzeigevorrichtung ausgewählt wird.

2. Flüssigkristallanzeigevorrichtung nach Anspruch 1, wobei jedes Flüssigkristallschichtsegment (1a, 11a; 1b, 11b) zwischen einer vorderen (3a, 3b) und einer hinteren (2) Orientierungsschicht angeordnet ist.

3. Flüssigkristallanzeigevorrichtung nach Anspruch 2, wobei mindestens eine der Orientierungsschichten (3a, 3b) durch ein Photoalignment-Verfahren vorgesehen werden kann, wobei die Schicht für jedes Pixel (9a, 9b) passend strukturiert wird.

4. Flüssigkristallanzeigevorrichtung nach Anspruch 2 oder 3, wobei eine der Orientierungsschichten (3) durch eine gemeinsame Schicht für beide Pixel (9a, 9b) mit einer einzigen Orientierungsrichtung dargestellt ist.

5. Flüssigkristallanzeigevorrichtung nach einem der vorangegangenen Ansprüche, wobei die Flüssigkristallschichtsegmente (1a, 11a; 1b, 11b) ein Twisted-Nematic-, Super-Twisted-Nematic- oder ein vertikal ausgerichtetes Twisted-Nematic-Flüssigkristallmaterial enthalten.

6. Flüssigkristallanzeigevorrichtung nach einem der vorangegangenen Ansprüche, wobei das erste und zweite Farbfilter (7a, 7b) jeweils auf einer Betrachterseite des ersten und zweiten Flüssigkristallschichtsegments (1a, 11a; 1b, 11b) angeordnet sind.

7. Flüssigkristallanzeigevorrichtung nach einem der Ansprüche 1 bis 6, wobei jede Orientierungsschicht (3a, 3b; 2) im Wesentlichen transparent ist und die Anzeigevorrichtung in einer transmissiven Anzeigevorrichtung vorgesehen ist.

8. Flüssigkristallanzeigevorrichtung nach einem der Ansprüche 1 bis 6, welche weiterhin eine reflektierende Schicht (16) aufweist, die auf einer Rückseite der hinteren Orientierungsschicht angeordnet ist, wobei die Anzeige eine reflektive Anzeigevorrichtung bildet.

9. Flüssigkristallanzeigevorrichtung nach einem der Ansprüche 1 bis 6, wobei die Anzeige ein rücktransflektierendes Element aufweist, um eine transflektive Anzeigevorrichtung vorzusehen.

## Revendications

1. Dispositif d'affichage à cristaux liquides avec un premier pixel (9a, 19a) qui comprend un premier segment (1a, 11a) d'une couche constituée de matériau à cristaux liquides ayant un premier angle de torsion et avec un deuxième pixel (9b, 19b) qui comprend un deuxième segment (1b, 11b) d'une couche constituée de matériau à cristaux liquides ayant un deuxième angle de torsion, dans lequel un premier et un deuxième filtre chromatique (7a, 7b) sont disposés de façon alignée par rapport audits premier et deuxième segments (1a, 11a; 1b, 11b), respectivement, d'une couche constituée de matériau à cristaux liquides, lesdits filtres chromatiques (7a, 7b) étant agencés de manière à transmettre de la lumière d'une première et d'une deuxième longueur d'onde, respectivement, la deuxième longueur d'onde étant différente de la première longueur d'onde, **caractérisé en ce que** ledit premier angle de torsion est choisi de manière à optimiser la transmission à ladite première longueur d'onde et **en ce que** ledit deuxième angle de torsion est choisi de manière à optimiser la transmission à ladite deuxième longueur d'onde par le biais dudit dispositif d'affichage.

2. Dispositif d'affichage à cristaux liquides selon la revendication 1, dans lequel chaque segment (1a, 11a; 1b, 11b) d'une couche constituée de matériau à cristaux liquides est enfermé entre une couche d'alignement avant (3a, 3b) et une couche d'alignement arrière (2).

3. Dispositif d'affichage à cristaux liquides selon la revendication 2, dans lequel au moins une desdites couches d'alignement (3a, 3b) peut être obtenue par un processus de photo-alignement, ladite couche étant mise en configuration de manière à s'adapter à chaque pixel (9a, 9b).

4. Dispositif d'affichage à cristaux liquides selon la revendication 2 ou 3, dans lequel une desdites couches d'alignement (3) est une couche commune pour les deux pixels (9a, 9b) ayant une seule direction d'alignement.

5. Dispositif d'affichage à cristaux liquides selon l'une quelconque des revendications précédentes 1 à 4, dans lequel lesdits segments (1a, 11a; 1b, 11b) d'une couche constituée de matériau à cristaux liquides comprennent un d'un matériau à cristaux liquides nématique torsadé, nématique supertorsadé ou nématique torsadé verticalement aligné.

6. Dispositif d'affichage à cristaux liquides selon l'une quelconque des revendications précédentes 1 à 5, dans lequel lesdits premier et deuxième filtres chromatiques (7a, 7b) sont disposés sur un côté du spectateur desdits premier et deuxième segments (1a, 11a; 1b, 11b), respectivement, d'une couche constituée de matériau à cristaux liquides.

7. Dispositif d'affichage à cristaux liquides selon l'une quelconque des revendications précédentes 1 à 6, dans lequel chaque couche d'alignement (3a, 3b; 2) est essentiellement transparente et ledit dispositif d'affichage est renfermé dans un dispositif d'affichage à transmission.

8. Dispositif d'affichage à cristaux liquides selon l'une quelconque des revendications précédentes 1 à 6, comprenant encore une couche réfléchissante (16) qui est déposée sur un côté arrière de ladite couche d'alignement arrière, ledit dispositif d'affichage constituant un dispositif d'affichage à réflexion.

9. Dispositif d'affichage à cristaux liquides selon l'une quelconque des revendications précédentes 1 à 6, ledit dispositif d'affichage comprenant un élément de rétrotransflexion pour générer un dispositif d'affichage à transflexion.
